# FASCICULE DE BREVET EUROPEEN

(11) **EP 3 234 914 B1**
(45) Date de publication et mention de la délivrance du brevet: **10.10.2018**
(21) Numéro de dépôt: 15820476.8
(22) Date de dépôt: 17.12.2015
(51) Int. Cl.: G06T 7/00, G06T 15/08, G06T 19/20

(54) **PROCEDE DE DISCRIMINATION ET D'IDENTIFICATION PAR IMAGERIE 3D D'OBJETS D'UNE SCENE**
VERFAHREN ZUR UNTERSCHEIDUNG UND IDENTIFIZIERUNG VON OBJEKTEN EINER SZENE DURCH 3D-BILDGEBUNG
METHOD FOR DISCRIMINATION AND IDENTIFICATION OF OBJECTS OF A SCENE BY 3-D IMAGING

(30) Priorité: 19.12.2014 FR 1402929
(43) Date de publication de la demande: 25.10.2017
(73) Titulaire: THALES, 92400 Courbevoie (FR); Université de Lorraine, 54052 Nancy Cedex (FR); Sispia, 94300 Vincennes (FR)
(72) Inventeur: BERECHET, Stefan, 94340 Joinville le Pont (FR); BERECHET, Ion, 94300 Vincennes (FR); BELLET, Jean-Baptiste, 57050 Metz (FR); BERGINC, Gérard, 94320 Thiais (FR)
(74) Mandataire: Henriot, Marie-Pierre
(86) Numéro de dépôt international: PCT/EP2015/080258
(87) Numéro de publication internationale: WO 2016/097168

(56) Documents cités:
- WO-A2-2007/103216
- CA-A1- 2 365 062
- ZHANG WEIDONG ET AL: "Mesenteric Vasculature-Guided Small Bowel Segmentation on 3-D CT", IEEE TRANSACTIONS ON MEDICAL IMAGING, IEEE SERVICE CENTER, PISCATAWAY, NJ, US, vol. 32, no. 11, 1 novembre 2013 (2013-11-01), pages 2006-2021, XP011535593, ISSN: 0278-0062, DOI: 10.1109/TMI.2013.2271487 [extrait le 2013-10-28]

## Description

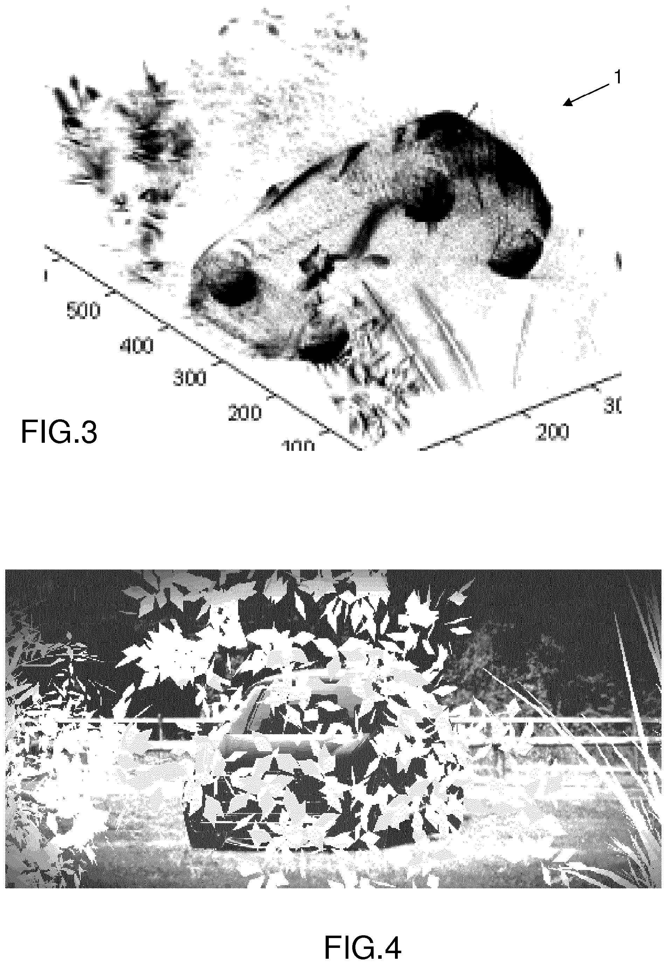

Le domaine de l'invention est celui de la discrimination et de l'identification d'objets quelconques qui peuvent être dissimulés dans une scène complexe comme illustré figure 4. Ces objets peuvent se masquer les uns les autres, ce qui rend l'identification et la discrimination des objets particulièrement difficiles.

Différents types de visualisation tridimensionnelle existent. Certaines visualisations offrent une image en profondeur, ou image 2,5 D. Ces techniques ne permettent pas de récupérer l'ensemble des voxels (« volumetric pixels ») tridimensionnels, elles sont fondées sur les techniques stéréoscopiques liées à l'optimisation d'une différence de marche du rayon optique ou électromagnétique entre les différents points de deux images ; cette différence de marche est calculable si les objets se situent à courte portée du système d'imagerie. L'identification est donc limitée aux courtes distances.

Certaines techniques d'imagerie nécessitent un balayage du faisceau laser ou de lumière sur la scène, et une séquence de mesures donne un nuage de points 3D. Plusieurs balayages à plusieurs angles de vue sont nécessaires pour obtenir une information tridimensionnelle mais le mouvement relatif du porteur contenant le système de balayage produit une distorsion de nuage de points à nuage de points, le recalage est complexe et dégrade la résolution et l'identification.

Les techniques dites des silhouettes obtenues à partir de vues multiples donnent une enveloppe extérieure peu détaillée. Si les objets contiennent une zone d'ombre ou si un objet se trouve dans l'ombre d'un autre objet, une grande partie de l'enveloppe est perdue donc l'identification et la discrimination des deux objets n'est pas réalisable.

Les technologies type Spin Image nécessitent des bases de données et ne peuvent pas être appliquées pour des objets dissimulés dans des scènes complexes sans connaissance a priori.

Les techniques de regroupement de voxels lié à une reconstruction de surface par isodensité permettent d'obtenir la surface externe des objets mais éliminent les informations internes contenues dans l'objet.

Les techniques de reconstruction tridimensionnelle liées à une optimisation de bases de connaissances et à l'extraction de signaux faibles et dont un exemple est présenté dans le document « Procédé de reconstruction synthétique d'objets illuminés par une onde électromagnétique et/ou excités par une onde élastique » (EP 2 929 421 ou US 8 345 960), nécessitent des bases de données et que celles-ci soient optimisées afin de réaliser la meilleure reconstruction tridimensionnelle possible. Les bases de connaissance ne représentent souvent les objets que par un ensemble de surfaces tridimensionnelles externes qui peuvent être modélisées par des facettes. Les structures transparentes (vitres...) sont mal prises en compte, ce qui nuit fortement à la visualisation complète de l'objet en 3D. Ces techniques sont aussi tributaires de la disponibilité des bases de connaissance.

La technique MIP (Maximum Intensity Projection) permet la visualisation 2D de données tridimensionnelles. Cette technique projette les voxels sur un plan de projection ; les voxels sont déterminés par les rayons joignant le plan de projection au point d'observation avec un seuil d'intensité imposé. Les résultats 2D ne permettent pas d'obtenir une valeur de la profondeur et des distances. Pour créer une illusion de rotation et une notion de profondeur et ainsi améliorer le rendu 3D, plusieurs plans de projection sont réalisés à des angles d'observation successifs. On peut citer comme exemple de technique MIP, celle décrite dans le document WO 2007/103216.

Les techniques de rendu de l'intensité des voxels permettent une visualisation tridimensionnelle bruitée, ce qui diminue la discrimination entre différents contigus de la scène observée.

Les nuages de points 3D obtenus directement par un positionnement cartésien des voxels ne permettent qu'une faible discrimination et apportent des artefacts liés aux fausses alarmes.

Les techniques de complétion surfacique et dont un exemple est présenté dans le document « Procédé de reconstruction 3d d'un objet d'une scène » (US2013/0100131), permettent de remplir les zones lacunaires par génération de surface tridimensionnelle pour obtenir un ensemble de données complétées de l'objet, sans recourir à une base de données extérieure. Elles donnent ainsi une surface externe complète de l'objet sans discontinuité surfacique ; les données internes situées derrière des transparents (vitres par exemple) ne sont pas reconstruites et se trouvent éliminées du processus d'identification. Un processus de discrimination de deux objets proches est plus difficilement atteignable, parce que la génération de surfaces peut être mathématiquement complexe.

Le but de l'invention est de pallier ces inconvénients.

Plus précisément l'invention a pour objet un procédé de discrimination et d'identification par imagerie 3D d'un objet dans une scène complexe. Il est principalement caractérisé en ce qu'il comporte les étapes de la revendication 1.

Il comprend éventuellement une étape de visualisation du volume 3D en voxels réduit et/ou du volume en voxels optimisé.

Selon une caractéristique, il comprend en outre une étape pour générer à partir de la séquence d'images 2D MIP, des coordonnées et du seuil d'intensité choisi, un nuage de points 3D (8) de l'objet.

Selon une autre caractéristique, il comporte en outre les étapes suivantes :
- générer à partir du volume 3D de la scène complexe et du seuil d'intensité choisi, un nuage de points 3D brut de la scène complexe,
- générer à partir du volume 3D optimisé et du seuil d'intensité optimisé, un nuage de points 3D optimisé de l'objet,
- générer à partir d'une superposition du nuage de points 3D brut de la scène, du nuage de points 3D optimisé de l'objet, et éventuellement du nuage de points 3D de l'objet, un nuage de points 3D global optimisé de l'objet inclus dans la scène complexe,
- visualiser le nuage 3D global optimisé.

Ces nuages peuvent également être visualisés par l'opérateur.

Le procédé permet une discrimination, une identification et éventuellement un positionnement de l'objet. La précision des détails de l'objet est rendue possible par la densification du nuage de points, ce qui permet aussi d'améliorer l'identification de l'objet de la scène. Les nuages de points tridimensionnels permettent de séparer et de discriminer les différents objets de la scène et de discriminer l'objet à identifier des autres éléments de la scène. L'ensemble des nuages de points associés à l'objet est positionné dans un repère cartésien absolu, ce qui permet de calculer simplement les positions de l'objet et les différentes distances entre l'objet et d'autres éléments de la scène. L'objet est replacé dans son contexte opérationnel.

La solution apportée comble les inconvénients individuels de chaque technique de visualisation existante. Il n'est pas nécessaire de compléter les données (notamment les données masquées par d'autres éléments de la scène) car elles sont implicitement présentes.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de volume 3D avec le quadrillage correspondant aux différents voxels, obtenu par reconstruction 3D,
la figure 2 montre un exemple d'enchaînement des différentes étapes du procédé selon l'invention,
la figure 3 montre un exemple de visualisation 3D d'un volume 3D en voxels d'une scène complexe, sans le quadrillage et obtenu par reconstruction 3D,
la figure 4 montre un exemple d'image 2D d'une scène complexe,
la figure 5 montre un exemple de séquence d'images 2D MIP d'un objet à identifier,
la figure 6 montre un exemple de visualisation 3D du volume 3D réduit de l'objet à identifier,
la figure 7 montre un exemple de visualisation 3D du volume 3D optimisé de l'objet à identifier,
la figure 8 montre un exemple de visualisation 3D d'un nuage de points 3D MIP de l'objet à identifier,
la figure 9 montre un exemple de visualisation 3D d'un nuage de points 3D brut de la scène complexe,
la figure 10 montre un exemple de visualisation 3D d'un nuage de points 3D optimisé de l'objet à identifier,
les figures 11 montre un exemple de visualisation 3D d'un nuage de points 3D global optimisé de l'objet dans la scène complexe, avec comme objet une voiture (fig 11a), ou deux voitures (fig 11b).

D'une figure à l'autre, les mêmes éléments sont repérés par les mêmes références.

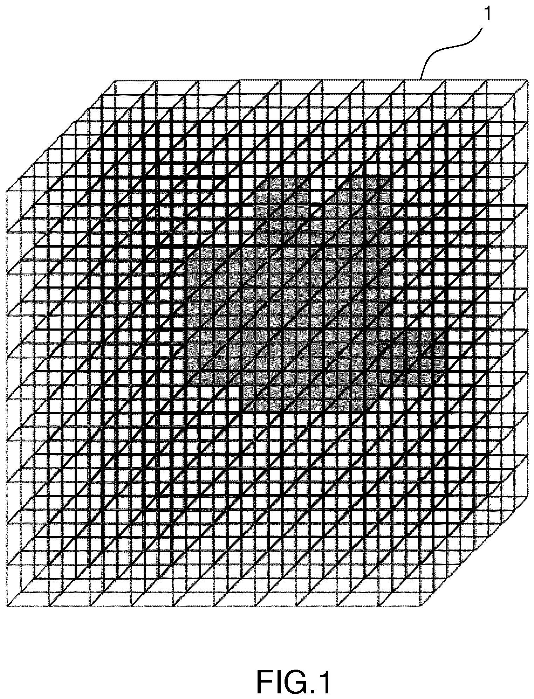

Le procédé selon l'invention est appliqué à un volume 3D en voxels d'une scène complexe. Cette scène a donc été préalablement transformée par imagerie 3D en ce volume 3D (1) dont un exemple est montré figure 1.

Ce volume tridimensionnel peut être obtenu grâce à un procédé de reconstruction par transmission ou par fluorescence (Optical Projection Tomography, imagerie nucléaire ou X-Ray Computed Tomography) ou par réflexion (réflexion d'une onde laser ou par réflexion solaire dans le cas de la bande visible (entre 0,4µm et 0,7µm) ou proche infrarouge (entre 0,7µm et 1µm ou SWIR entre 1µm et 3µm) ou en prenant en compte l'émission thermique de l'objet (imagerie thermique entre 3µm et 5µm et entre 8µm et 12µm), ce processus de reconstruction tridimensionnelle est décrit dans le brevet « Système optronique et procédé d'élaboration d'images en trois dimensions dédiés à l'identification » (US 8,836,762, EP 2 333 481).

On utilise l'ensemble des voxels issus d'une reconstruction tridimensionnelle avec l'intensité associée, cette reconstruction ayant de préférence été obtenue par réflexion.

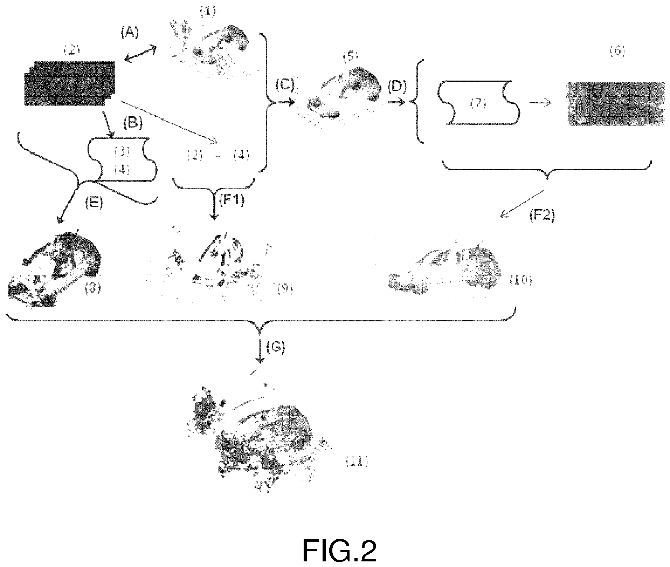

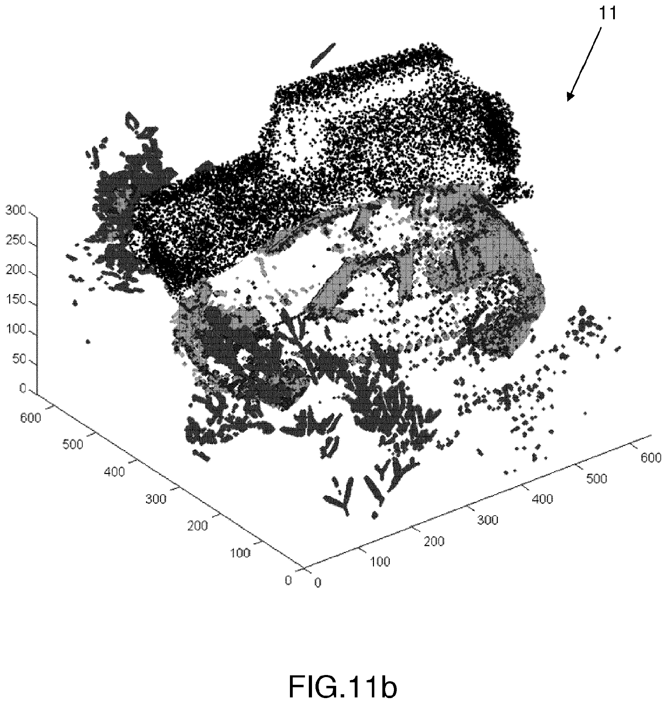

Le procédé de discrimination et d'identification selon l'invention comporte les étapes suivantes décrites en relation avec la figure 2. On désigne par objet un ou plusieurs éléments de la scène : un objet peut être une voiture comme montré dans les exemples des figures 2 à 11a, ou deux voitures comme montré dans l'exemple de la figure 11b, ou encore un élément de voiture comme la jante.

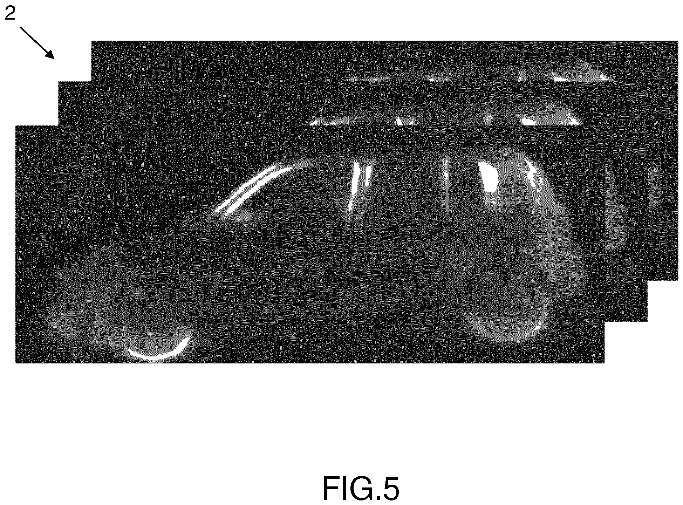

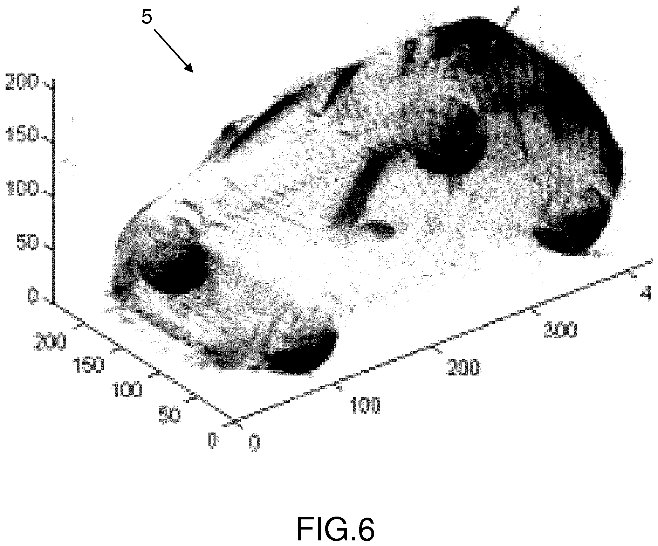

Parmi les étapes suivantes, certaines requièrent la participation d'un opérateur à partir d'une visualisation sur écran, d'autres sont mises en oeuvre automatiquement.
❖ A) à partir du volume 3D en voxels (1) de la scène complexe (représenté sur les figures 2 et 3 sans le quadrillage des voxels), la technique MIP est utilisée pour que l'opérateur visualise en temps réel sur son écran par exemple la scène complexe suivant différents plans de projection (correspondant à différents angles d'observation) et selon un seuil d'intensité déterminés expérimentalement par l'opérateur, et pour qu'au cours de ces différentes visualisations dont un exemple est montré figure 4, il dégrossisse le volume à analyser incluant un objet qu'il souhaite discriminer et/ou identifier. A l'issue de ce processus itératif de type MIP, une séquence d'images 2D MIP (2) de l'objet à identifier, a été générée, qui correspond visuellement à un volume 3D réduit contenant l'objet à identifier, mais ce volume réduit n'est pas encore déterminé à ce stade. Un exemple d'une telle séquence de trois images 2D MIP (2) est montré figures 2 et 5.
❖ B1) extraire automatiquement à partir de cette séquence d'images 2D MIP (2), des coordonnées (3) de ce volume réduit contenant l'objet à identifier.
❖ B2) déterminer un des seuils en intensité (4) qui a été utilisé dans le processus MIP de l'étape A) ; ce seuil est déterminé expérimentalement par l'opérateur
❖ C) extraire automatiquement à partir du volume 3D en voxels (1) de la scène complexe, et en utilisant les coordonnées (3) et le seuil en intensité (4), un volume en voxels (5) correspondant à l'objet à identifier (dit autrement ce volume 3D réduit est déterminé en fonction des coordonnées (3) et ses voxels sont seuillés en intensité en fonction du seuil d'intensité (4)) : il s'agit du volume réduit de l'étape A). L'opérateur peut visualiser ce volume réduit (5) s'il le souhaite, comme montré figures 2 et 6 ; cette visualisation peut lui offrir une possibilité d'identifier l'objet.
❖ D) générer automatiquement à partir du volume en voxels (5), par un processus d'optimisation en seuillage d'intensité, chaque intensité étant associée à une couleur :
   - un seuil optimisé (7),
   - puis en utilisant ce seuil optimisé, un volume 3D optimisé en voxels (6) de l'objet à identifier.

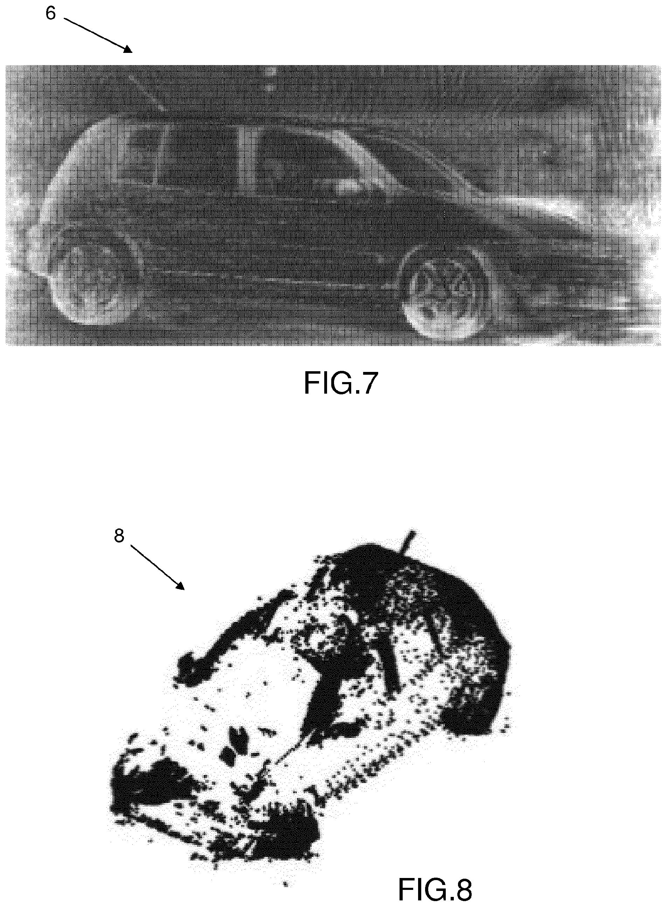

On obtient ainsi en quelque sorte le volume réduit, en couleur après seuillage, que l'opérateur peut également visualiser comme montré figures 2 et 7, et identifier. On obtient un volume 3D en voxels qui présente visuellement beaucoup plus de détails que le volume 3D d'origine.

Au cours des étapes précédentes, A à C, l'opérateur a eu la possibilité d'identifier l'objet avec une probabilité croissante. A l'issue de cette étape D, l'opérateur a atteint la plus forte probabilité d'identifier l'objet.

L'objet à identifier peut être lui-même divisé en sous-objets. Les sous-objets d'une voiture sont par exemple les roues, le capot, .... Les étapes précédentes sont alors appliquées à chaque sous-objet. On obtient pour chaque sous-objet, une séquence d'images 2D MIP (2), des coordonnées (3) de volume 3D réduit, un seuil d'intensité choisi (4), un volume 3D en voxels réduit (5), un seuil optimisé (7) et un volume 3D optimisé (6).

A l'issue de cette étape D, lorsque l'objet comporte plusieurs éléments ou sous-objets présentant un intérêt pour l'opérateur, ceux-ci ont pu être discriminés.

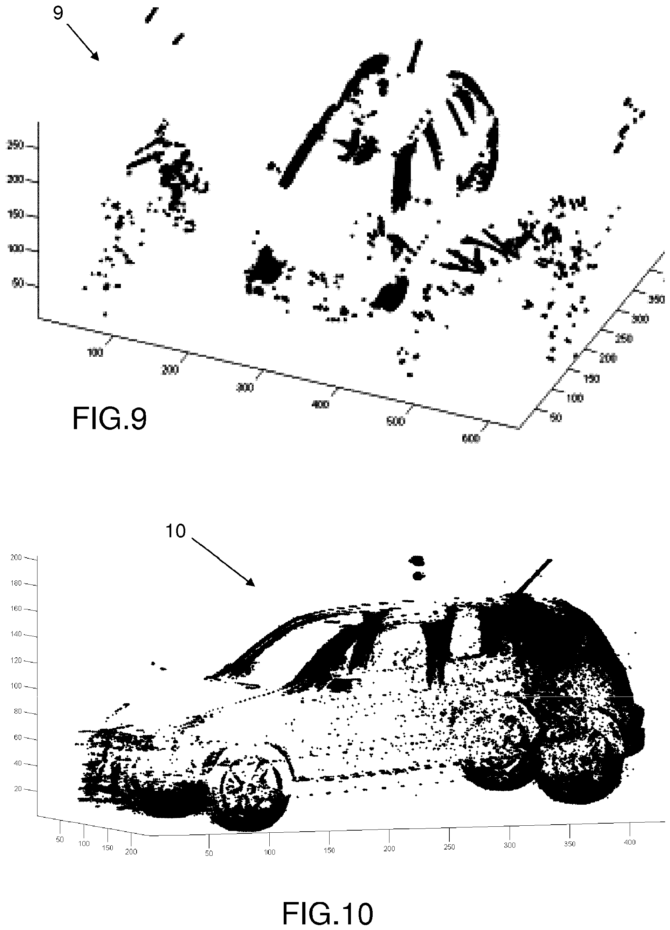

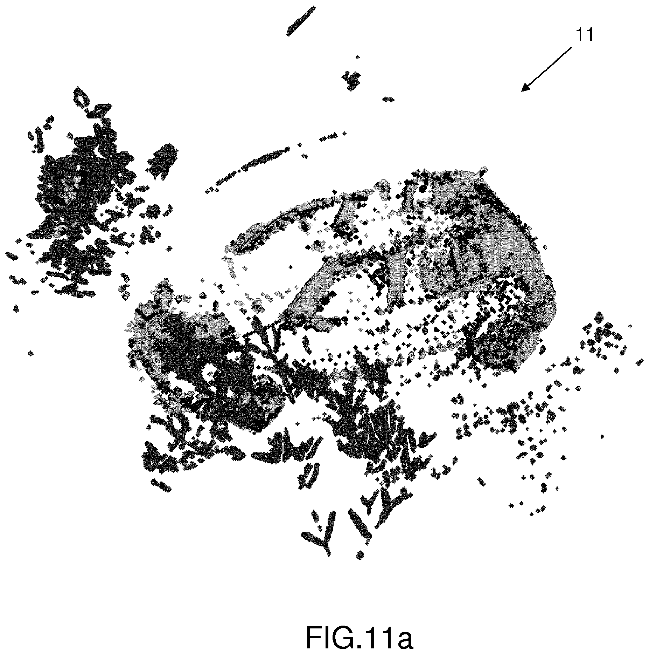

Les étapes suivantes visent à remettre en situation l'objet identifié.
❖ E) éventuellement générer automatiquement à partir de la séquence d'images 2D MIP (2) en utilisant les coordonnées (3) et le seuil en intensité (4), un nuage de points 3D (8) de l'objet à identifier, que l'opérateur peut éventuellement visualiser, comme montré figures 2 et 8.
❖ F1) générer automatiquement à partir de la séquence d'images 2D MIP (2) et en utilisant le seuil en intensité (4), un nuage de points 3D brut (9) de la scène complexe incluant donc l'objet à identifier, que l'opérateur peut éventuellement visualiser, comme montré figures 2 et 9.
❖ F2) générer automatiquement à partir du volume 3D optimisé en voxels (6) et en utilisant le seuil en intensité (7), un nuage de points 3D optimisé (10) de l'objet à identifier, que l'opérateur peut éventuellement visualiser, comme montré figures 2 et 10.
❖ G) générer automatiquement par superposition :
   - du nuage de points 3D brut (9) de la scène complexe,
   - du nuage de points 3D optimisé (10) de l'objet, qui présente une forte densité au niveau des détails de l'objet permettant son identification,
   - et du nuage de points 3D (8) de l'objet s'il a été généré,
   un nuage de points 3D (11) global optimisé de l'objet inclus dans la scène complexe. Ce nuage permet de positionner l'objet dans son contexte opérationnel en prenant en compte les coordonnées absolues, de le discriminer, d'aider l'opérateur à l'identifier avec une forte probabilité. En effet, l'opérateur visualise ce nuage (11) global optimisé, dont un exemple est montré figures 2 et 11a pour un objet qui représente une voiture ou figure 11b pour un objet qui représente deux voitures ; cela lui permet de visualiser l'objet identifié dans son contexte opérationnel.

Les différentes extractions des nuages de points permettent une diminution des artéfacts et du bruit.

L'ensemble des nuages de points associés à l'objet est positionné dans un repère cartésien absolu, ce qui permet de calculer simplement la position de l'objet et les différentes distances entre l'objet et d'autres éléments de la scène. L'objet est replacé dans son contexte opérationnel.

Lorsque des sous-objets ont été identifiés, chacune de ces étapes de mise en situation est appliquée en superposant les nuages respectivement obtenus à partir de chaque sous-objet.

Lorsque l'opérateur considère que le résultat n'est pas satisfaisant, ces étapes A à G peuvent être itérées afin d'obtenir la meilleure densification possible de ces détails.

A l'issue de l'étape G, lorsque l'objet comporte plusieurs éléments ou sous-objets discriminés entre eux, ceux-ci sont replacés dans leur contexte et leur positionnement, les uns par rapport aux autres, peut être mesuré dans des coordonnées cartésiennes.

Avec ce procédé, il est particulièrement aisé de visualiser en temps réelles différents éléments de la scène observée.

Selon l'invention, l'identification des objets de la scène est améliorée grâce à une densification du nuage de points tridimensionnel.

Ce procédé de discrimination et d'identification s'applique notamment au domaine de la sécurité pour l'identification et la localisation précise de cibles, et au domaine médical pour l'identification et la localisation de tumeurs.

La présente invention peut s'implémenter à partir d'éléments matériel et/ou logiciel. Elle peut être disponible en tant que produit programme d'ordinateur sur un support lisible par ordinateur, ce programme d'ordinateur comprenant des instructions de code permettant d'effectuer les étapes du procédé de discrimination et d'identification. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Procédé de discrimination et d'identification par imagerie 3D d'un objet dans une scène complexe, **caractérisé en ce qu'**il comporte les étapes suivantes :
- générer (A) une séquence d'images de l'objet (2), à partir d'un volume 3D en voxels de la scène complexe, ce volume étant prédéterminé (1) et visualisé par un opérateur en utilisant un processus itératif de type « Maximum Intensity Projection » à partir d'un plan de projection et d'un seuil d'intensité déterminés par l'opérateur à chaque itération, la séquence d'images obtenue étant désignée séquence d'images 2D MIP comme « Maximum Intensity Projection »,
- extraire (B1) automatiquement à partir de la séquence d'images 2D MIP (2), des coordonnées (3) d'un volume réduit correspondant à la séquence d'images 2D MIP (2),
- choisir (B2) un (4) des seuils d'intensité utilisés au cours des itérations de l'étape A), ce choix étant effectué par l'opérateur,
- à partir du volume 3D en voxels de la scène complexe (1), des coordonnées (3) et du seuil d'intensité choisi (4), extraire (C) automatiquement un volume 3D en voxels réduit (5) contenant l'objet,
- générer (D) automatiquement à partir du volume réduit (5), un seuil d'intensité optimisé (7) par optimisation en seuillage d'intensité, une couleur étant associée à chaque intensité, et un volume en voxels optimisé (6), à partir de ce seuil d'intensité optimisé,
- identifier l'objet par visualisation.

2. Procédé de discrimination et d'identification d'un objet dans une scène complexe selon la revendication précédente, **caractérisé en ce qu'**il comprend une étape de visualisation du volume 3D en voxels réduit (5).

3. Procédé de discrimination et d'identification d'un objet dans une scène complexe selon l'une des revendications précédentes, **caractérisé en ce qu'**il comprend une étape de visualisation du volume en voxels optimisé (6).

4. Procédé de discrimination et d'identification d'un objet dans une scène complexe selon l'une des revendications précédentes, **caractérisé en ce qu'**il comprend en outre une étape pour générer (E) à partir de la séquence d'images 2D MIP (2), des coordonnées (3) et du seuil d'intensité choisi (4), un nuage de points 3D (8) de l'objet.

5. Procédé de discrimination et d'identification d'un objet dans une scène complexe selon l'une des revendications précédentes, **caractérisé en ce qu'**il comporte en outre les étapes suivantes :
- générer (F1) à partir du volume 3D de la scène complexe (1) et du seuil d'intensité choisi (4), un nuage de points 3D brut (9) de la scène complexe,
- générer (F2) à partir du volume 3D optimisé (6) et du seuil d'intensité optimisé (7), un nuage de points 3D optimisé (10) de l'objet,
- générer (G) à partir d'une superposition du nuage de points 3D brut (9) de la scène et du nuage de points 3D optimisé (10) de l'objet, un nuage de points 3D global optimisé (11) de l'objet inclus dans la scène complexe,
- visualiser le nuage 3D global optimisé.

6. Procédé de discrimination et d'identification d'un objet dans une scène complexe selon les revendications 4 et 5 prises en combinaison, **caractérisé en ce que** le nuage de points global optimisé (11) est généré à partir de la superposition du nuage de points 3D brut (9) de la scène, du nuage de points 3D optimisé (10) de l'objet, et du nuage de points 3D (8) de l'objet.

7. Procédé selon la revendication 4 ou 5, **caractérisé en ce que** le nuage de points 3D (8) de l'objet et/ou le nuage de points 3D (9) de la scène et/ou le nuage de points 3D (10) optimisé de l'objet est visualisé par l'opérateur.

8. Procédé selon l'une des revendications précédentes, **caractérisé en ce que** le volume 3D en voxels (1) est obtenu par réflexion d'une onde optique visible ou IR sur la scène complexe ou par émission thermique de l'objet.

9. Un produit programme d'ordinateur, ledit programme d'ordinateur comprenant des instructions de code permettant d'effectuer les étapes du procédé selon l'une quelconque des revendications 1 à 8, lorsque ledit programme est exécuté sur un ordinateur.

## Patentansprüche

1. Verfahren zur Unterscheidung und Identifizierung eines Objekts durch 3D-Bildgebung in einer komplexen Szene, **dadurch gekennzeichnet, dass** es folgende Schritte beinhaltet:
- Erzeugen (A) einer Sequenz von Bildern des Objekts (2) von einem aus Voxeln gebildeten 3D-Volumen der komplexen Szene, wobei das Volumen durch einen Bediener vorbestimmt (1) und visualisiert wird unter Verwendung eines iterativen Prozesses vom Typ "Maximum Intensity Projection" von einer Projektionsebene und einer Intensitätsschwelle, die bei jeder Iteration durch den Bediener vorbestimmt werden, wobei die erzielte Bildsequenz als 2D MIP-Sequenz im Sinne von "Maximum Intensity Projection" bezeichnet wird,
- automatisches Extrahieren (B1), von der 2D MIP-Sequenz (2), der Koordinaten (3) eines reduzierten Volumens, welches der 2D MIP-Sequenz (2) entspricht,
- Wählen (B2) einer (4) der Intensitätsschwellen, welche im Verlauf der Iterationen des Schrittes (A) verwendet werden, wobei diese Auswahl durch den Bediener erfolgt,
- von dem 3D-Volumen aus Voxeln der komplexen Szene (1), der Koordinaten (3) und der gewählten Intensitätsschwelle (4), automatisches Extrahieren (C) eines reduzierten 3D-Volumens aus Voxeln (5), welches das Objekt enthält,
- automatisches Erzeugen (D), von dem reduzierten Volumen (5), einer optimierten Intensitätsschwelle (7) durch Optimieren bei der Schwellenwertbestimmung, wobei jeder Intensität eine Farbe assoziiert ist, und eines optimierten Volumens aus Voxeln (6), von der optimierten Intensitätsschwelle,
- Identifizieren des Objekts durch Visualisieren.

2. Verfahren zur Unterscheidung und Identifizierung eines Objekts in einer komplexen Szene nach dem vorhergehenden Anspruch, **dadurch gekennzeichnet, dass** es einen Schritt des Visualisierens des reduzierten 3D-Volumens aus Voxeln (5) beinhaltet.

3. Verfahren zur Unterscheidung und Identifizierung eines Objekts in einer komplexen Szene nach einem der vorhergehenden Ansprüche, **dadurch gekennzeichnet, dass** es einen Schritt des Visualisierens des optimierten Volumens aus Voxeln (6) beinhaltet.

4. Verfahren zur Unterscheidung und Identifizierung eines Objekts in einer komplexen Szene nach einem der vorhergehenden Ansprüche, **dadurch gekennzeichnet, dass** es zudem einen Schritt zum Erzeugen (E), von der 2D MIP-Bildsequenz (2), der Koordinaten (3) und der gewählten Intensitätsschwelle (4), einer 3D-Punktwolke (8) des Objekts beinhaltet.

5. Verfahren zur Unterscheidung und Identifizierung eines Objekts in einer komplexen Szene nach einem der vorhergehenden Ansprüche, **dadurch gekennzeichnet, dass** es zudem folgende Schritte beinhaltet.
- Erzeugen (F1), von dem D3-Volumen der komplexen Szene (1) und der gewählten Intensitätsschwelle (4), einer rohen 3D-Punktwolke (9) der komplexen Szene,
- Erzeugen (F2), von dem optimierten D3-Volumen (6) und der optimierten Intensitätsschwelle (7), einer optimierten 3D-Punktwolke (10) des Objekts,
- Erzeugen (G), von einer Überlagerung der rohen 3D-Punktwolke (9) der Szene und der optimierten 3D-Punktwolke (10) des Objekts, einer globalen, optimierten 3D-Punktwolke (11) des in der komplexen Szene enthaltenen Objekts,
- Visualisieren der globalen, optimierten 3D-Punktwolke.

6. Verfahren zur Unterscheidung und Identifizierung eines Objekts in einer komplexen Szene nach den in Kombination betrachteten Ansprüchen 4 und 5, **dadurch gekennzeichnet, dass** die globale, optimierte Punktwolke (11) von der Überlagerung der rohen 3D-Punktwolke (9) der Szene, der optimierten 3D-Punktwolke (10) des Objekts und der 3D-Punktwolke (8) des Objekts erzeugt wird.

7. Verfahren nach Anspruch 4 oder 5, **dadurch gekennzeichnet, dass** die 3D-Punktwolke (8) des Objekts und/oder die 3D-Punktwolke (9) der Szene und/oder die optimierte 3D-Punktwolke (10) des Objekts vom Bediener visualisiert werden.

8. Verfahren nach einem der vorhergehenden Ansprüche, **dadurch gekennzeichnet, dass** das 3D-Volumen aus Voxeln (1) durch Reflexion einer sichtbaren optischen oder IR-Welle auf der komplexen Szene oder durch thermische Emission des Objekts erzielt wird.

9. Computerprogrammprodukt, wobei das Computerprogramm Code-Befehle beinhaltet, welche es ermöglichen, die Schritte des Verfahrens nach einem der Ansprüche 1 bis 8 durchzuführen, wenn das Programm auf einem Computer ausgeführt wird.

## Claims

1. Method for discrimination and identification by 3D imaging of an object in a complex scene, **characterised in that** it comprises the following steps:
- generating (A) a sequence of images of the object (2), based on a 3D voxel volume of the complex scene, this volume being predetermined (1) and visualised by an operator by using an iterative process of "Maximum Intensity Projection" type based on a projection plane and an intensity threshold determined by the operator at each iteration, the obtained sequence images being designated sequence of 2D MIP like "Maximum Intensity Projection" images,
- extracting (B1) automatically based on the sequence of 2D MIP images (2), coordinates (3) of a reduced volume corresponding to the sequence of 2D MIP images (2),
- choosing (B2) one (4) of the intensity thresholds used during the iterations of step A), this choice being made by the operator,
- based on the 3D voxel volume of the complex scene (1), coordinates (3) and the chosen intensity threshold (4), extracting (C) automatically a reduced 3D voxel volume (5) containing the object,
- generating (D) automatically based on the reduced volume (5), an optimised intensity threshold (7) by intensity thresholding optimisation, a colour being associated with each intensity, and an optimised voxel volume (6), based on this optimised intensity threshold,
- identifying the object by visualisation.

2. Method for discrimination and identification of an object in a complex scene according to the previous claim, **characterised in that** it comprises a step visualising some reduced 3D voxel volume (5).

3. Method for discrimination and identification of an object in a complex scene according to one of the previous claims, **characterised in that** it comprises a step visualising some optimised voxel volume (6).

4. Method for discrimination and identification of an object in a complex scene according to one of the previous claims, **characterised in that** it further comprises a step for generating (E) based on the sequence of 2D MIP images (2), coordinates (3) and the chosen intensity threshold (4), a 3D points cloud (8) of the object.

5. Method for discrimination and identification of an object in a complex scene according to one of the previous claims, **characterised in that** it further comprises the following steps:
- generating (F1) based on the 3D volume of the complex scene (1) and the chosen intensity threshold (4), a raw 3D points cloud (9) of the complex scene,
- generating (F2) based on the optimised 3D volume (6) and the optimised intensity threshold (7), an optimised 3D points cloud (10) of the object,
- generating (G) based on an overlay of the raw 3D points cloud (9) of the scene and the optimised 3D points cloud (10) of the object, an optimised global 3D points cloud (11) of the object included in the complex scene,
- visualising the optimised global 3D cloud.

6. Method for discrimination and identification of an object in a complex scene according to claims 4 and 5 taken in combination, **characterised in that** the optimised global points cloud (11) is generated based on the overlay of the raw 3D points cloud (9) of the scene, the optimised 3D points cloud (10) of the object, and the 3D points cloud (8) of the object.

7. Method according to claim 4 or 5, **characterised in that** the 3D points cloud (8) of the object and/or the 3D points cloud (9) of the scene and/or the optimised 3D points cloud (10) of the object is visualised by the operator.

8. Method according to one of the previous claims, **characterised in that** the 3D voxel volume (1) is obtained by reflection of a visible or IR optic wave on the complex scene or by thermal emission from the object.

9. A computer program product, said computer program comprising code instructions for implementing the steps of the method according to any one of claims 1 to 8, when said program is executed on a computer.
